Europäisches Patentamt

European Patent Office

Office européen des brevets

(11) Veröffentlichungsnummer: **0 132 446**
**A1**

## (12) EUROPÄISCHE PATENTANMELDUNG

(21) Anmeldenummer: 83107136.0

(22) Anmeldetag: 21.07.83

(51) Int. Cl.⁴: **G 02 B 6/04**
**G 02 B 6/10**

(43) Veröffentlichungstag der Anmeldung:
13.02.85 Patentblatt 85/7

(84) Benannte Vertragsstaaten:
AT BE CH DE FR IT LI SE

(71) Anmelder: Frisch Kabel- und Verseilmaschinenbau GmbH
Postfach 12 67 Kaiserswerther Strasse 79
D-4030 Ratingen(DE)

(72) Erfinder: Düwelhenke, Rainer
Ulenbroich 20
D-4030 Ratingen(DE)

(72) Erfinder: Meyer, Joachim
Tiefenbroicherstrasse 75
D-4030 Ratingen 4(DE)

(74) Vertreter: Schneider, Wilhelm et al,
c/o kabelmetal electro GmbH Kabelkamp 20 Postfach 260
D-3000 Hannover 1(DE)

(54) Vorrichtung zum Einlegen von Lichtwellenleitern in einen Trägerkörper.

(57) Beim Einlegen von Lichtwellenleitern in einen Trägerkörper (1) mit zur Aufnahme der Lichtwellenleiter bestimmten schraubenförmigen Nuten wird der Trägerkörper durch unterschiedliche Abzugsgeschwindigkeiten der Abzüge 4 und 10 während des Einlegens längenmäßig elastisch gedehnt, um der eingelegten Lichtwellenleitern die zur Weiterverarbeitung erforderliche Überlänge gegenüber dem Trägerkörper zu geben.

Fig.2

EP 0 132 446 A1

FRISCH
Kabel- und Verseilmaschinenbau GmbH

18. Juli 1983
FR 46

## Vorrichtung zum Einlegen von Lichtwellenleitern in einen Trägerkörper

Gegenstand der Erfindung ist eine Vorrichtung zum Einlegen von Lichtwellenleitern in einen vorgeformten, elastischen, strangförmigen Trägerkörper, der an seiner Oberfläche mehrere schraubenförmig und parallel zueinander verlaufende Nuten zur Aufnahme der Lichtwellenleiter aufweist und einen umlaufenden, verseilkorbähnlichen Magazinträger auf dessen Achse durchläuft, welcher Magazinträger eine der Anzahl der Nuten entsprechende Anzahl von Lichtwellenleitervorräten auf einer Kreisbahn führt, währenddessen die Lichtwellenleiter aus ihren Vorräten abgezogen und beim Durchlauf durch einen Nippel in die Nuten eingelegt werden.

Bei der Verarbeitung von faseroptischen Lichtwellenleitern zu kabelähnlichen Strängen ist es erforderlich, die Lichtwellenleiter frei von Zugkräften oberhalb der Reißgrenze zu halten. Diese Grenze liegt erheblich viel niedriger als die Zugkräfte, denen elektrische Kabel bei Herstellung, Verlegung und Betrieb ausgesetzt sind. Man ist deshalb dazu übergegangen, Lichtwellenleiter mit zugfesten Bauelementen zu verarbeiten, die die auftretenden Zugkräfte aufnehmen und die Lichtwellenleiter davon freihalten. Dies setzt voraus, daß der Lichtwellenleiter gegenüber den anderen Bauelementen eine gewisse Überlänge hat, die es ihm erlaubt, Zugkräften auf diese Bauelemente zu folgen, ohne zu zerreißen.

...

Der Erfindung liegt die Aufgabe zugrunde, für das Einlegen von Lichtwellenleitern in Trägerkörper, die an ihrer Oberfläche mehrere schraubenförmig und parallel zueinander verlaufende Nuten zur Aufnahme der Lichtwellenleiter aufweisen, eine Vorrichtung anzugeben, die ein Einlegen des Lichtwellenleiters in Überlänge ermöglicht.

Gemäß der Erfindung geschieht dies bei Vorrichtungen der eingangs beschriebenen Art dadurch, daß vor und hinter dem Nippel Abzüge für den Trägerkörper vorgesehen sind, deren Abzugsgeschwindigkeiten so aufeinander abgestimmt sind, daß der Trägerkörper zwischen den beiden Abzügen während des Einlegens des Lichtwellenleiters im elastischen Bereich in seiner Länge gedehnt ist. Dies hat zur Folge, daß der Trägerkörper nach dem Verlassen des in seiner Durchlaufrichtung hinter dem Nippel liegenden Abzugs seine ursprüngliche kürzere Länge wieder einnimmt, während der Lichtwellenleiter seine Länge beibehält und damit die erforderliche Überlänge aufweist.

Um einem unter der Wirkung der Dehnung eventuell auftretenden Auswandern der Nuten in Umfangrichtung des Trägerkörpers und damit einem undefinierten Nachführen dem einzulegenden Lichtwellenleiter vorzubeugen, ist es von Vorteil, wenn in Weiterbildung der Erfindung der in Durchlaufrichtung des Trägerkörpers vor dem Nippel liegende Abzug so dicht wie möglich an dem Nippel angeordnet ist. Da es andererseits zweckmäßig ist, auch den Magazinträger so dicht wie möglich beim Nippel anzuordnen, wird der in Durchlaufrichtung des Trägerkörpers hinter dem Nippel liegende Abzug in das rohrförmige Achslager des Magazinträgers eingebaut.

Um eine kurze Baulänge der gesamten Anlage zu erzielen, ist es von Vorteil, wenn gemäß der Erfindung der in Durchlaufrichtung des Trägerkörpers hinter dem Nippel liegende Abzug derjenige ist, der den Trägerkörper durch die ganze Vorrichtung zieht.

Als besonders vorteilhaft für den erfindungsgemäßen Zweck hat sich die Verwendung von Band- oder Raupenabzügen erwiesen.

Die Figuren zeigen in zum Teil schematischer Darstellung ein Ausführungsbeispiel eines Trägerkörpers und einer erfindungsgemäßen Vorrichtung.

...

**0132446**

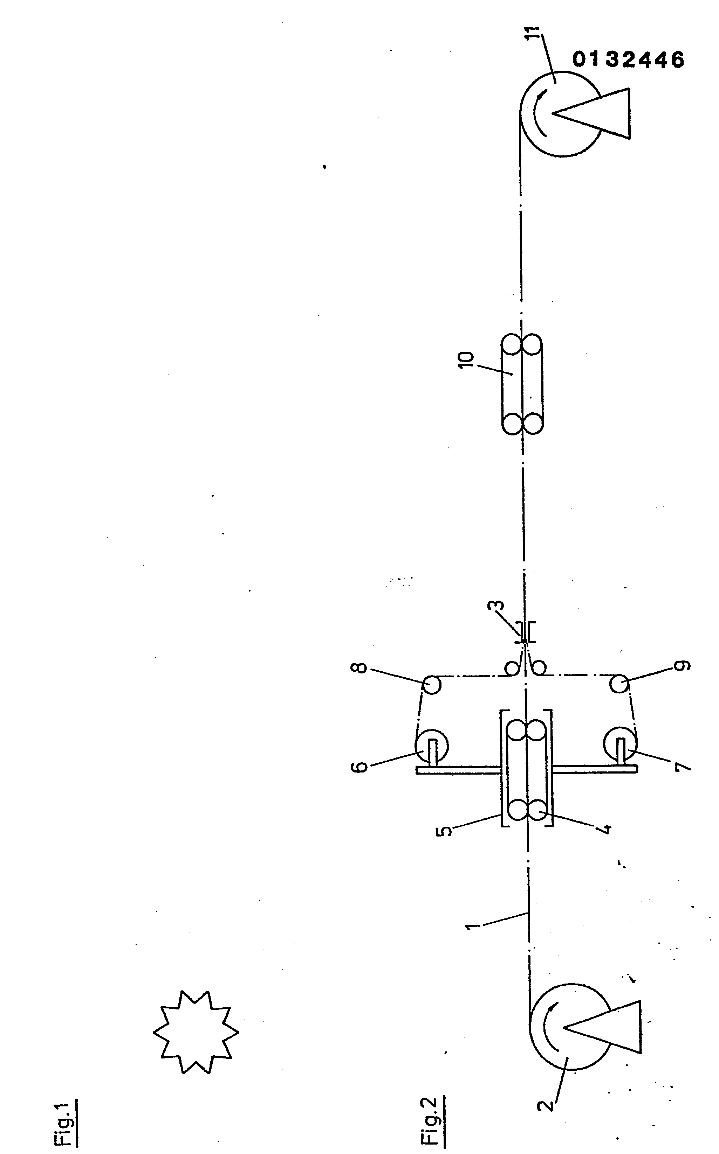

In Fig. 1 ist ein Querschnitt eines Trägerkörpers dargestellt, der an seinem Umfang zehn Nuten aufweist, in die mit der erfindungsgemäßen Vorrichtung je ein Lichtwellenleiter eingelegt werden soll. Dies geschieht nach Fig. 2 dadurch, daß der Trägerkörper 1 von einem Ablaufgestell 2 abgewickelt und durch die erfindungsgemäße Vorrichtung geführt wird. Diese umfaßt den raumfest vor dem zylindrischen Nippel 3 angeordneten Abzug 4, dessen Gehäuse 5 als rohrförmiges Achslager für den angetriebenen Magazinträger 5 dient. Der Magazinträger 5 trägt im Beispiel der Übersichtlichkeit wegen nur zwei mit Lichtwellenleiters bewickelte Spulen 6 und 7 als Magazine. Er ähnelt dem Verseilkorb der aus der Herstellung elektrischer Kabel bekannten Verseilmaschinen. Von den Spulen 6 und 7 werden Lichtwellenleiter abgezogen und über mit dem Magazinträger 5 umlaufende Umlenkrollen 8 und 9 dem Nippel zugeführt, in welchen sie in die Nuten des Trägerkörpers 2 eingelegt werden. Weiterhin umfaßt die Vorrichtung den Abzug 10, der den Trägerkörper 1 durch die ganze Vorrichtung zieht und dem Aufwickelgestell 11 zuführt. Die Abzugsgeschwindigkeiten der Abzüge 4 und 10 sind so aufeinander abgestimmt, daß der Trägerkörper 1 zwischen den beiden Abzügen 4 und 10 während des Einlegens der Lichtwellenleiter in die Nuten im elastischen Bereich in seiner Länge gedehnt ist. Hinter dem Abzug 10 geht die Dehnung dann zurück, und die Lichtwellenleiter haben die gewünschte Überlänge. Sie liegen nicht bündig, sondern mit genügend Spiel in den Nuten des Trägerkörpers 1.

0132446

F R I S C H
Kabel- und Verseilmaschinenbau GmbH

18. Juli 1983
FR 46

Patentansprüche

1. Vorrichtung zum Einlegen von Lichtwellenleitern in einen vorgeformten, elastischen, strangförmigen Trägerkörper, der an seiner Oberfläche mehrere schraubenförmig und parallel zueinander verlaufende Nuten zur Aufnahme der Lichtwellenleiter aufweist und einen umlaufenden, verseilkorbähnlichen Magazinträger auf dessen Achse durchläuft, welcher Magazinträger eine der Anzahl der Nuten entsprechende Anzahl von Lichtwellenleitervorräten auf einer Kreisbahn führt, währenddessen die Lichtwellenleiter aus ihren Vorräten abgezogen und beim Durchlauf durch einen Nippel in die Nuten eingelegt werden, dadurch gekennzeichnet, daß vor und hinter dem Nippel Abzüge für den Trägerkörper vorgesehen sind, deren Abzugsgeschwindigkeiten so aufeinander abgestimmt sind, daß der Trägerkörper zwischen den beiden Abzügen während des Einlegens der Lichtwellenleiter im elastischen Bereich in seiner Länge gedehnt ist.

2. Vorrichtung nach Anspruch 1, dadurch gekennzeichnet, daß der in Durchlaufrichtung des Trägerkörpers vor dem Nippel liegende Abzug so dicht wie möglich an den Nippel angeordnet ist.

3. Vorrichtung nach Anspruch 1 oder 2, dadurch gekennzeichnet, daß der in Durchlaufrichtung des Trägerkörpers vor dem Nippel liegende Abzug in das rohrförmige Achslager des Magazinträgers eingebaut ist.

...

4. Vorrichtung nach Anspruch 1 oder einem der folgenden, dadurch gekennzeichnet, daß als der in Durchlaufrichtung des Trägerkörpers hinter dem
Nippel liegende Abzug derjenige ist, der den Trägerkörper durch die
ganze Vorrichtung zieht.

5. Vorrichtung nach Anspruch 1 oder einem der folgenden, dadurch gekennzeichnet, daß Band- oder Raupenabzüge verwendet sind.

0132446

Fig.1

Fig.2

**0132446**

Nummer der Anmeldung

EP 83 10 7136

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | DE-A-2 519 050  (AEG) <br> * Ansprüche 1,2; Figuren * <br><br> ----- | 1,2,4 | G 02 B  6/04 <br> G 02 B  6/10 |

**RECHERCHIERTE SACHGEBIETE (Int. Cl.4)**

G 02 B

Der vorliegende Recherchenbericht wurde für alle Patentansprüche erstellt.

| Recherchenort | Abschlußdatum der Recherche | Prüfer |
|---|---|---|
| DEN HAAG | 22-03-1984 | PFAHLER R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................

& : Mitglied der gleichen Patentfamilie, überein- stimmendes Dokument

EPA Form 1503 03 82